Europäisches Patentamt

European Patent Office (11) Numéro de publication: **0 167 432**

Office européen des brevets **B1**

(12) # FASCICULE DE BREVET EUROPÉEN

(45) Date de publication du fascicule du brevet: **04.01.89**

(51) Int. Cl.⁴: **G 01 S 17/02,** G 01 S 3/78, F 41 G 3/06, F 41 G 7/22

(21) Numéro de dépôt: **85401095.6**

(22) Date de dépôt: **04.06.85**

(54) Système aéroporté de détection optoélectrique, de localisation et de poursuite omnidirectionnelle de cible.

(30) Priorité: **06.06.84 FR 8408851**

(43) Date de publication de la demande:
**08.01.86 Bulletin 86/2**

(45) Mention de la délivrance du brevet:
**04.01.89 Bulletin 89/1**

(84) Etats contractants désignés:
**DE GB IT NL SE**

(56) Documents cité:
**EP-A-0 035 101**
**DE-C-2 454 480**
**GB-A-1 539 581**
**GB-A-2 071 957**
**US-A-3 892 466**
**US-A-4 067 061**

(73) Titulaire: **THOMSON- CSF, 173, Boulevard Haussmann, F-75379 Paris Cédex 08 (FR)**

(72) Inventeur: **Cojan, Yves, THOMSON- CSF SCPI 173, bld Haussmann, F-75379 Paris Cedex 08 (FR)**
Inventeur: **Pressiat, Robert, THOMSON- CSF SCPI 173, bld Haussmann, F-75379 Paris Cedex 08 (FR)**

(74) Mandataire: **Benoit, Monique, THOMSON- CSF SCPI 19, avenue de Messine, F-75008 Paris (FR)**

EP 0 167 432 B1

LIBER, STOCKHOLM 1989

## Description

La présente invention concerne un système aéroporté de détection optoélectrique, de localisation et de poursuite omnidirectionnelle de cible.

Son utilisation est plus particulièrement envisagée, dans le cadre d'un système air-air d'interception et de combat d'avions ennemis.

La réalisation d'un tel système emprunte aux techniques d'exécution de dispositifs de détection infrarouge qui équipent notamment des autodirecteurs. Dans ces dispositifs l'optique est généralement placée sur un support orientable en élévation et en circulaire par rotation respectivement autour de deux axes orthogonaux. Ce support du type cardan, permet de déplacer angulairement l'axe optique, constituant l'axe de visée du dispositif, vis-à-vis d'un axe de référence, tel l'axe longitudinal de l'engin, solidaire du corps de l'engin qui supporte l'ensemble du dispositif à imagerie.

Il est connu aussi par le document de brevet français 2 492 516 une solution qui permet de monter le détecteur fixe sur le corps de l'engin. Suivant cette solution des moyens de déport d'image permettent de maintenir invariable la position du centre de l'image dans le plan détecteur en présence des rotations en élévation et en circulaire. Ces moyens sont constitués à l'aide de miroirs plan réfléchissants, de prismes, ou encore de faisceaux de fibres optiques ordonnées. Cette optique de déport d'image, bien qu'assurant la stabilité de l'axe optique en sortie, introduit une rotation de l'image autour de cet axe qui dépend des valeurs de rotation imprimées selon les axes du montage orientable en élévation et en circulaire. Pour y remédier, le dispositif est équipé de moyens de compensation électroniques ou optiques effectuant la correction nécessaire à partir des valeurs de rotation détectées par des capteurs angulaires.

Il est connu d'autre part par le brevet US-A-4 087 061 de disposer un objectif récepteur sur un montage cardan permettant de l'orienter par rotation au tour d'axes mécaniques perpendiculaires passant par le centre du cardan. Le cardan comporte un premier cadre qui supporte l'objectif et permet de l'orienter en élévation, un deuxième cadre qui supporte le premier cadre et tourne en circulaire, et un troisième cadre qui supporte le deuxième cadre et qui tourne en roulis. Une optique de déport d'image permet de preserver l'image centrée sur le photodétecteur monté fixe sur le missile. Cette optique comprend une succession de miroirs de renvoi pour réfléchir la direction de visée de l'objectif et aboutir à la direction finale centrée sur le décteur. Un miroir d'entrée est placé au centre du cardan et est monté sur le premier cadre par l'intermédiaire d'un entraînement mécanique asservi pour produire un rapport 2/1 en rotation par rapport à celle d'élévation. Suivant cette solution et en faisant abstraction de la rotation en roulis, le premier miroir d'entrée effectue un double mouvement de rotation correspondant à la rotation complète du cardan autour de l'axe de circulaire et à la rotation de valeur moitié de celle effectuée autour de l'axe d'élévation, en sorte de renvoyer continuellement la direction de visée selon celle de l'axe circulaire sans transiter par la direction de l'axe d'élévation. Le rayonnement reçu est focalisé par l'optique réceptrice sur le miroir d'entrée qui est suivi d'une lentille pour repasser en rayons parallèles. D'autres miroirs de renvoi font ensuite cheminer ce rayonnement jusqu'au miroir de sortie qui le renvoit en direction du détecteur fixe par l'intermédiaire d'une lentille terminale de focalisation. Le montage optique de déport d'image en aval de l'objectif n'autorise pratiquement l'observation que d'une image entrée sur l'axe de visée. Les possibilités d'observation en élévation sont limitées à un champ de $\pm$ 30°. La solution est volumineuse, complexe de mise en oeuvre délicate, comportant notamment trois moteurs d'entraînement.

Ces solutions présentent des limites en ce qui concerne la préservation cumulée de diverses caractéristiques opérationnelles intéressantes qui consistent en un débattement angulaire important en élévation et en circulaire sans altérer la pupille du dispositif, celle-ci devant être la plus grande possible, et en obtenant une faible inertie de l'équipage orientable.

Le but de la présente invention est de réaliser un système qui s'intègre bien sur un avion compte-tenu que la tête optique orientable doit nécessairement se trouver située à l'extérieur du fuselage, et qui présente des caractéristiques de localisation angulaire très étendues. La localisation en circulaire doit être possible pour n'importe quelle direction, soit sur 360° correspondant à une observation dite panoramique ; en élévation, il est prévu de couvrir un champ très important, supérieur à 90°. Ces débattements angulaires doivent se produire sans que la pupille soit affectée par des éléments mécaniques de montage qui doivent rester en dehors du champ d'observation. Il est nécessaire aussi que l'équipage orientable présente une faible inertie pour autoriser une réponse rapide et permettre la poursuite video automatique de la cible visée. Enfin, il est prévu de compléter la localisation angulaire par détection infrarouge d'une localisation en distance par télémétrie laser pour transmettre des informations complètes à un organe d'exploitation annexe, tel une unité de conduite de tir.

Pour résumer ces différents points, le système proposé utilise les techniques précitées en les complétant et en les adaptant. Outre la conception particulière de la tête optique, il comporte un séparateur optique pour distinguer une voie réceptrice à imagerie vidéo et une voie d'émission-réception pour la télémétrie laser. En poursuite automatique, le traitement vidéo de la voie imagerie permet de mesurer les écarts de la cible visée et les signaux d'écarts correspondants sont utilisés pour asservir la direction de visée de la tête optique et celle du télémètre laser.

Suivant l'invention, il est proposé un système de détection conformément à la revendication 1.

Suivant un mode de réalisation, le système utilisé dans le domaine infrarouge est équipé d'un dispositif de déflexion optique pour produire un balayage linéaire ou circulaire au niveau du détecteur constitué par une barrette.

Les différentes particularités et avantages de l'invention ressortiront de la description qui suit donnée à titre d'exemple, à l'aide des figures annexées qui représentent:

Fig. 1 -un diagramme général d'un système de détection, de localisation et de poursuite conforme à la présente invention ;

Fig. 2 -un schéma simplifié du système montrant éventuellement les éléments optiques ;

Fig. 3 -une variante de réalisation de l'objectif d'entrée ;

Fig. 4 -les trièdres de référence de l'aéronef et de l'optique de visée ;

Fig. 5 -une figuration alignée des éléments optiques ;

Fig. 6 -un premier mode de réalisation de l'optique orientable ;

Fig. 7 -un deuxième mode de réalisation de l'optique orientable.

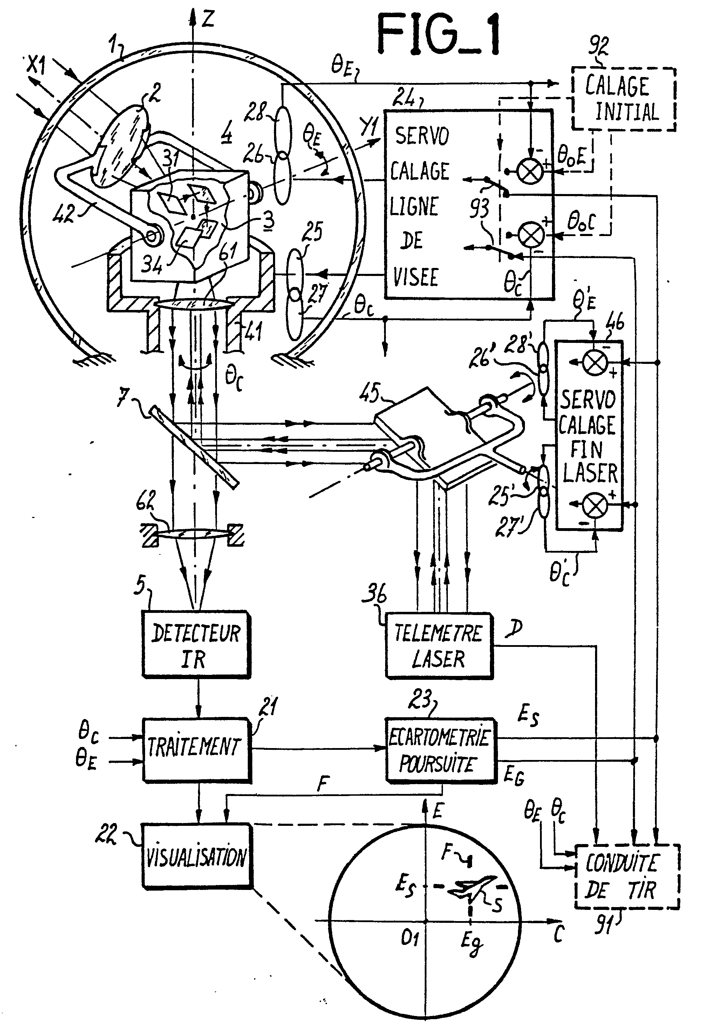

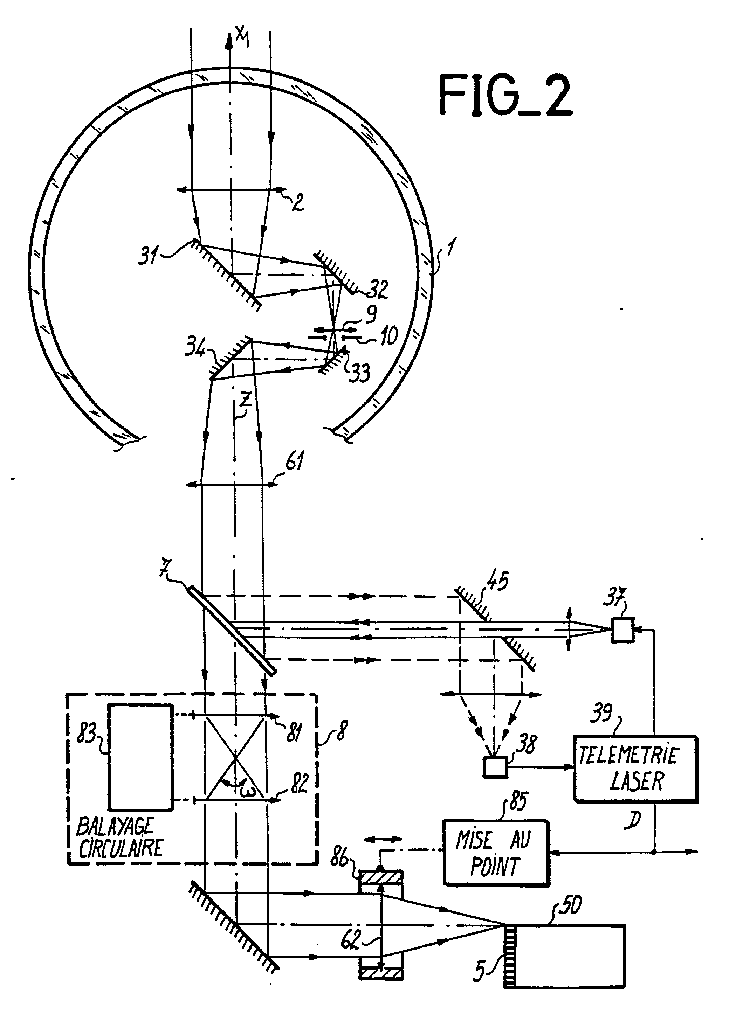

En se reportant aux figures 1 et 2, le système se compose d'une tête optique orientable placée sous un dôme 1 extérieur au fuselage de l'aéronef. A l'intérieur de l'aéronef se trouvent les parties restantes, essentiellement la détection et les circuits électroniques.

La partie optique orientable comporte un objectif d'entrée 2 et une optique de déport d'image 3 supportés pour un montage à deux degrés de liberté 4. Ce montage du type cardan est formé par un premier cadre 41 orientable autour d'un axe Z, dit de circulaire, et par un deuxième cadre 42 qui tourne autour d'un axe Y1, dit d'élévation, perpendiculaire au précédent. Ce deuxième cadre supporte l'optique d'entrée 2 et une partie de l'optique de déport d'image 3. Le montage 4 permet d'orienter l'axe optique X1, ou axe de visée du système, les rotations θE en élévation et θC en circulaire se traduisant finalement par une rotation autour du centre O du cardan et par un dépointage θ par rapport à un axe de référence lié au support, c'est à dire à l'aéronef.

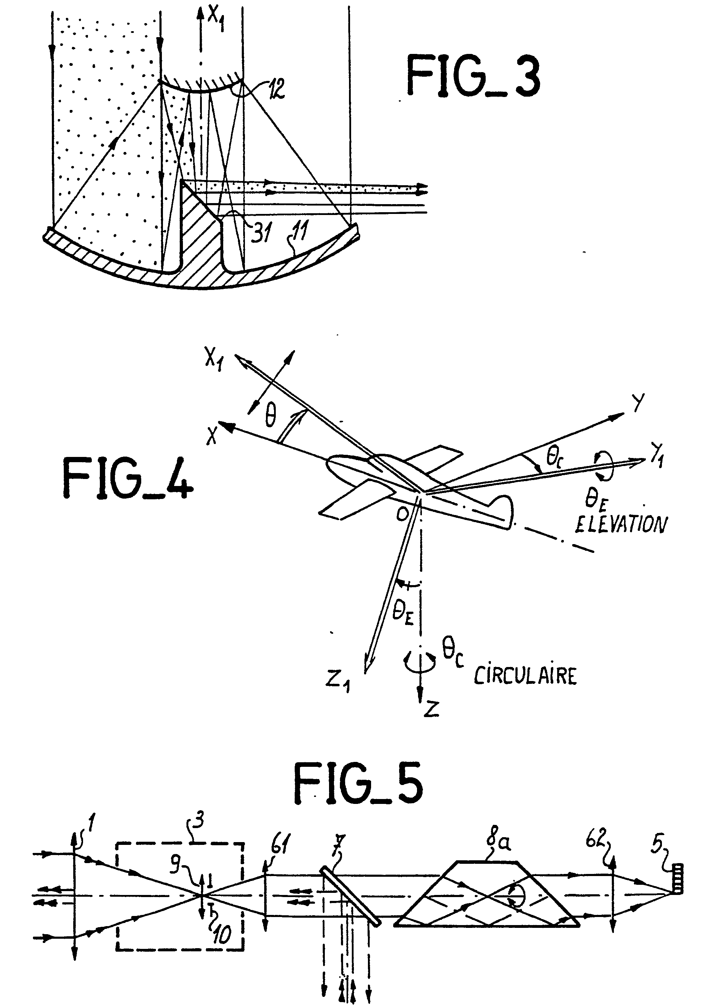

La figure 4 définit les axes de l'équipement. On considère X, Y et Z comme le trièdre de référence normalisé de l'aéronef et le trièdre X1, Y1 et Z1 celui solidaire de l'optique d'entrée 2 orientable, la direction X1 représentant l'axe de visée. Sur la configuration représentée on a considéré une première rotation θC en circulaire autour de l'axe Z, et une deuxième rotation en élévation de valeur θE au tour de l'axe Y1 suivant lesquelles est obtenue la configuration définitive X1, Y1, Z1. L'axe X de référence peut correspondre à l'axe longitudinal de l'avion comme représenté.

L'optique de déport d'image 3 est avantageusement constituée par une formule catoptrique groupant quatre miroirs de renvoi dont un premier miroir 31 à l'entrée pour réfléchir le rayonnement de réception provenant de l'objectif d'entrée 2.

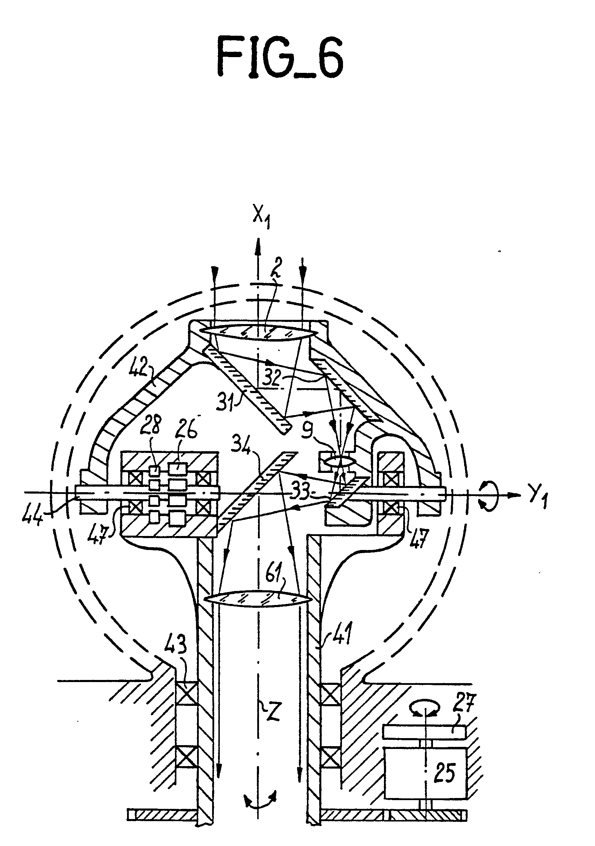

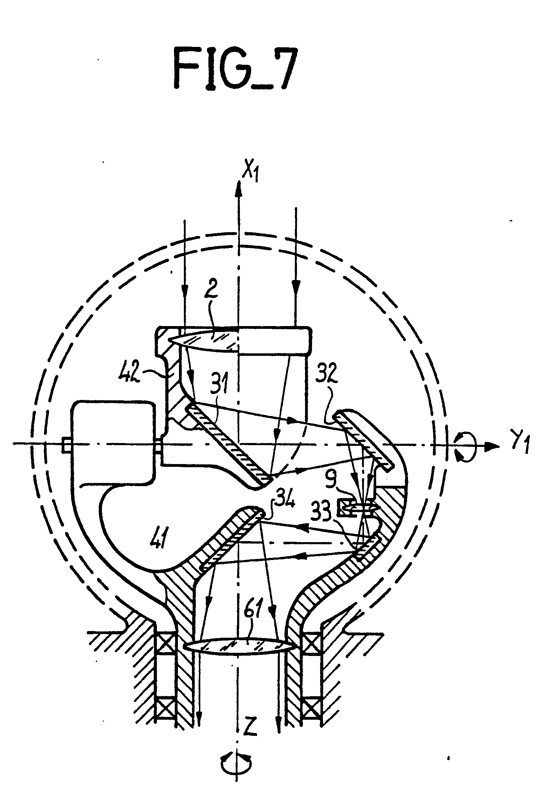

Ce miroir est en conséquence solidaire du cadre 42. De même, en sortie, un miroir 34 est monté solidaire du cadre 41 et renvoie le faisceau lumineux selon l'axe Z de rotation en circulaire. Des exemples de réalisation seront décrit ulterieurement à l'aide des figures 6 et 7.

Conformément à l'invention, la focale de l'optique 2 est telle que le plan image correspondant se situe dans le trajet optique entre les miroirs 31 et 34 et on dispose d'un deuxième objectif en sortie du déport d'image 3 pour reformer l'image du champ observé sur le plan sensible d'un dispositif photodétecteur 5. On a ainsi définit une première voie optique destinée plus particulièrement à recueillir un rayonnement infrarouge, par exemple dans la bande 8 à 12 microns. Afin de ménager une deuxième voie optique pour la télémétrie laser et pouvant travailler dans une autre bande, par exemple autour de 1,06 microns, il est interéssant de concevoir l'objectif de sortie sous forme de deux éléments, une première lentille 61 qui forme un montage afocal avec l'optique 2 et une deuxième lentille 62. La lentille 61 réforme un faisceau parallèle (le rayonnement infrarouge provenant d'une cible éloignée correspond à celui émis par un point source et est reçu par l'optique d'entrée 2 selon un faisceau parallèle) et facilite le montage d'un séparateur de voies 7 sur le trajet optique. Ce système est constitué par un miroir dichroïque qui réfléchit le rayonnement d'une voie, par exemple celui de la voie laser, et laisser passer l'autre, les bandes spectrales étant distinctes. Dans l'exemple considéré ce miroir 7 peut être réalisé en Germanium. La deuxième lentille 62 sert a focaliser le faisceau dans le plan de détection. Le détecteur 5 est disposé selon l'axe Z.

Dans le domaine infrarouge et notamment dans les bandes 3 à 5 microns et 8 à 12 microns, on ne dispose pas actuellement de détecteurs matriciels ou de tubes bien adaptés et l'on utilise un détecteur à barrette en faisant défiler l'image de champ devant le réseau linéaire détecteur à l'aide d'un disposif de déflexion optique. Certaines solutions font défiler l'image linéairement selon une direction perpendiculaire à la barrette, on produit ainsi un balayage cartésien en X et Y.

Selon d'autres solutions on produit un balayage circulaire en faisant tourner l'image autour d'un centre, la barette étant disposée radialement à partir de ce centre ; on pourra par exemple se reporter à ce sujet à la publication de brevet français 2 492 616 qui décrit une solution à lentilles cylindriques. Une solution de ce type est symbolisée sur la figure 2 par le bloc 8 groupant des lentilles cylindriques 81, 82 et un organe 83 d'entraînement en rotation autour de l'axe 2. Une autre solution possible à prisme de Wollaston 8a est indiquée sur la figure 5. Dans chacune de ces solutions, l'organe moteur 83 imprime une vitesse de rotation constante à l'optique correspondante, cette vitesse étant égale à la moitié de la valeur de rotation que l'on veut imprimer à l'image de champ. La rotation de l'image permet à tous les points de celle-ci d'être successivement analysés par la barrette détectrice 5, chaque élément photodétecteur analysant les points situés à une distance correspondante du centre 01 de l'image. Le dispositif de déflexion 8 qui produit le balayage de champ est positionné en aval de séparateur de voies 7 étant donné qu'il ne doit agir que sur la voie optique destinée au détecteur 5.

Le détecteur infrarouge 5 est généralement associé à un système de refroidissement 50, l'ensemble étant fixé à la structure de l'aéronef.

L'ensemble optique comporte en outre des éléments additionnels concourrant à la correction et à la formation d'une image de bonne qualité sur le détecteur, ces éléments additionnels consistent en une lentille collectrice 9 et un diaphragme 10 localisés dans l'optique de déport d'image 3 à proximité du plan focal de l'optique d'entrée 2.

Comme représenté sur la figure 3, cette optique réceptrice peut être réalisée selon un montage Cassegrain avec un miroir principal concave 11 et un miroir secondaire 12 plan ou convexe, l'axe optique de réception X1 passant par le centre O du cardan, lequel, constitue le centre instantané de rotation de l'équipage mobile orientable. Le miroir d'entrée 31 est solidaire de miroir principal 11 ainsi que le miroir 12 par des bras non figurés. L'optique Cassegrain autorise une pupille d'entrée plus grande à encombrement égal.

Les circuits en aval du détecteur 5 comportent des circuits de traitement préalable 21 des signaux détectés pour alimenter avec ces signaux d'une part, un dispositif de visualisation cathodique 22 et d'autre part des circuits d'écartométrie et de poursuite automatique 23. L'image du champ observé par l'optique réceptrice 2 est formée sur l'écran cathodique; le point 01 central représente la trace de l'axe X1. Une fenêtre électronique F permet de pointer la cible S par l'opérateur et les écarts $E_S$ et $E_G$ présentés par le centre de cette fenêtre par rapport à 01 représentent le dépointage angulaire de l'axe X1 par rapport à la cible S. Les signaux d'écart alimentant des asservissements de position 24 pour produire des rotations en circulaire et en élévation permettant de rattraper la direction de la cible et d'assurer la poursuite automatique. Les servomécanismes 24 alimentant des moteurs d'entraînement en rotation détaillés sûr la figure 6. Un moteur de circulaire 25 fixé à l'avion par son stator entraîne le cadre 41 autour de l'axe Z. Un moteur d'élévation 26 solidaire du cadre 41 par son stator entraîne le deuxième cadre 42. A ces moteurs sont couplés des capteurs angulaires 27 et 28 respectivement, par exemple des résolvers, pour la mesure de position angulaire et pour former les boucles d'asservissements correspondantes lors de la phase d'acquisition.

Les signaux d'écart $E_S$ et $E_G$ sont transmis également à une unité d'exploitation annexe 91, par exemple une conduite de tir. Le système de détection et de localisation est prévu pour coopérer avec un organe de désignation 92 installé sur l'avion et qui fournit les données initiales de pointage de l'axe de visée vers une cible. L'élément 92 peut consister en un radar, viseur de casque, ou autre dispositif approprié installé à bord de l'avion. Ce pointage ou calage initial correspond à la phase d'acquisition précitée. Le dispositif 92 fournit les données $\theta_0E$ et $\theta_0C$ de pointage vers la cible et ces données sont comparées à celles de position $\theta E$ et $\theta C$ de la tête optique fournies par les capteurs pour produire les tensions de rattrappage correspondantes. Lorsque cette phase est achevée, on passe, au mode poursuite automatique et l'alimentation du servo 24 s'effectue alors directement par les signaux de rattrappage $E_S$ et $E_G$ mesurés en 23. Le commutateur 93 symbolise le passage de mode correspondant.

Pour fournir en outre l'information de distance D de la cible S, le système est équipé d'un télémètre laser 36 qui se compose d'un émetteur 37, par exemple une diode laser, pour produire des impulsions laser sous forme d'un pinceau lumineux très fin qui est transmis à la tête optique après réflexion sur le miroir dichroïque 7. Le rayonnement laser réfléchi par la cible est reçu par la tête optique est inversement renvoyé par le séparateur 7 vers le récepteur correspondant, telle une diode photosensible 38. Le champ du récepteur correspond à celui de l'émetteur et ces champs sont coaxiaux. Les circuits électroniques 39 mesurent le décalage temporel correspondant à la distance d'éloignement D de la cible S.

Comme le faisceau laser est très peu divergent, pour avoir une bonne concentration energétique il faut que l'axe du télémètre laser vise bien la cible. Ceci n'est pas réalisable avec une précision suffisante avec les moyens d'asservissement 24 à 28 de la tête optique, cet ensemble ne présentant pas une rapidité de réponse suffisante. Il est donc nécessaire de disposer d'un moyen de déviation rapide du faisceau laser qui le maintient pointé sur la cible avec précision. Ce moyen est constitué par un dispositif déviateur optique 45 et des circuits 46 de commande de la déviation. Le déviateur 45 est constitué par un petit miroir réfléchissant orientable selon deux axes perpendiculaires sur commande des asservissements de position à large bande 46 pour effectuer les rattrapages fins nécessaires à partir des données d'écart $E_S$ et $E_G$ mesurées par les circuits 23. Ces données sont comparées aux valeurs de position angulaire $\theta'C$ et $\theta'E$ relevées par les capteurs angulaires 27' et 28' selon une procédure analogue à celle d'acquisition précitée. Le calage initial du miroir est tel que l'axe optique du télémètre correspond à la position centrale O1 sur l'image visualisée.

On obtient ainsi un asservissement à faible débattement mais très rapide car le miroir 45 est de faible dimension et présente beaucoup moins d'inertie que la tête optique. De plus, il n'a à corriger que les erreurs de l'asservissement de la tête optique et fonctionne ainsi autour du zéro.

Les données $E_S$ et $E_G$ n'étant valable qu'en poursuite, la voie télémétrie est mise hors service durant l'acquisition préalable de cible par le calage initial de la tête optique.

Compte-tenu des faibles débattements à donner au miroir 45 pour rattraper le dépointage instantané de la cible, ce miroir 45 peut être ménagé avec un trou pour laisser passer le faisceau laser d'émission et renvoyer par ailleurs le faisceau laser reçu vers la diode détectrice 38 (figure 2).

Dans le cas ou l'on utilise une optique d'entrée du type Cassegrain, il faut décaler le pinceau laser pour qu'il tombe en dehors de la zone centrale de pupille non utilisée par suite de l'effet de masque du miroir secondaire 12.

Les figures 6 et 7 représentent plus en détail des modes de réalisation d'une tête optique de faible dimension et à faible inertie.

Le montage afocal 2-61 permet de disposer d'un faisceau de sortie parallèle, d'une optique 61 doit le diamètre peut être plus faible que celui de l'optique d'entrée 2, et d'un faisceau interne à l'optique de déport d'image qui va en diminuant jusqu'au plan focal où se trouve l'optique collectrice 9, puis croît à nouveau. On dispose donc d'un faisceau interne étroit qui facilite l'implantation des miroirs de renvoi intermédiaires 32 et 33 permettant de réaliser ceux-ci sous de très faibles dimensions. Le premier miroir 31, à l'entrée, renvoie le faisceau perpendiculairement selon une direction parallèle à l'axe d'élévation Y 1, puis le deuxième miroir 32 le renvoie ensuite parallèlement à l'axe de visée X1 (dans le cas de la figure 6) ou à l'axe Z (dans le cas de la figure 7); le troisième miroir 33 renvoie le faisceau selon la direction Y1 et enfin, le quatrième miroir 34, en sortie, le renvoie parallèlement à la direction Z fixe par rapport à l'avion. On se rend bien compte que la zone la plus étroite du trajet optique se trouve sur la partie latérale regroupant les miroirs 32 et 34 et la lentille collectrice 9 ce qui facilite leur intégration et leur montage sur le cadre 42. Le diaphragme 10 (figure 2) est obtenu par les montants mécaniques qui supportent l'optique 9. Dans la version figure 6, l'optique d'entrée 2 et les miroirs 32 à 33 sont solidaires du cadre 42 à deux degrés de liberté. Par contre dans la version figure 7, seule l'optique 2 et le miroir 31 sont supportés par le cadre 42; il en résulte que cette version est préférentielle car elle présente une inertie beaucoup plus faible autour de l'axe Y1 qui permet de réaliser un asservissement autour de cet axe Y1 avec une bande passante plus élevée; en outre, il est possible d'avoir une optique d'entrée de plus grand diamètre que dans le cas de la figure 6.

L'ensemble de la tête optique est entraîné en circulaire par le cadre 41 qui se termine côté avion par un corps tubulaire dans lequel est monté l'optique de sortie 61. Ce corps tubulaire constitue l'axe de rotation en circulaire et est découplé du fuselage au moyen de roulements à billes 43. L'entraînement en élévation s'effectue autour d'un axe mécanique 44 qui est également découplé de la partie 42 par des roulements 47 sur des paliers correspondants. Un palier supporte les organes moteur-couple 26 et capteur angulaire 28 réalisés sous de faibles dimensions. Les fils de connexion aboutissant à ces éléments passent dans la partie interne du tube de sortie du cadre 41 et ne sont pas figurés.

Le dôme transparent 1 présente des propriétés mécaniques nécessaires et également une forme apropriée, de préférence sphérique comme représentée pour tenir sur l'aéronef compte-tenu des forces aéro-dynamiques qui s'excercent sur lui. Il présente également des propriétés optiques de transmission suffisantes dans la bande d'exploitation utilisée, par exemple de 0,8 à 13 microns dans l'exemple considéré. Il isole la tête optique de l'environnement externe.

Dans le cas de cible en rapprochement l'image visualisée perd de sa netteté par suite de sa défocalisation dans le plan de détection. Pour remédier à ceci, le système est avantageusement complété par un dispositif de mise au point de l'optique terminale de focalisation 62. Ce dispositif est symbolisé sur la figure 2, il comporte un circuit 85 qui reçoit l'information distance la télémétrie laser et élabore un signal de commande permettant de déplacer un support 86 de l'optique 62 parallèlement à son axe optique. Le déplacement et le signal de commande correspondant se déduisent de la formule optique bien connue $1/D - 1/D' = 1/f$, D étant la distance de la cible donnée par le télémètrie 39, D' la distance de mise au point pour l'image et f la distance focale de l'objectif 62.

Le détecteur infrarouge 5 est constitué par une barrette d'éléments sensibles dans la bande spectrale envisagée et son exploitation est assurée par un circuit de transfert de charge intégré avec la barrette qui permet le multiplexage des éléments. Cette barrette est disposée selon un rayon du champ instantané dans le cas d'un système de balayage 8 rotatif associé de manière à faire correspondre à chaque élément de la barrette un champ annulaire correspondant. La bande de sensibilité de la barrette peut être située entre 8 et 12 microns ou entre 3 et 5 microns. Il est également possible d'utiliser deux barrettes sensibles, l'une dans la première de ces bandes et l'autre dans la seconde, ces barrettes étant disposées selon deux rayons differents, par exemple selon deux rayons opposés. Cette option permet un traitement par comparaison entre les détections dans les deux bandes et l'extraction de cibles sur fond leurré. Le circuit multiplexeur associé à la barrette permet un prétraitement dans le plan image et donc une simplification de l'éléctronique de traitement 21 en aval et du câblage, ainsi qu'une amélioration de la fiabilité.

Le refroidissement de la barrette détectrice peut être obtenu de manière connue par un double circuit de détente Joule-Thomson bi-gaz argon et azote. L'argon permet un refroidissement rapide des détecteurs et l'azote l'entretien de la température à sensiblement 80° Kelvin.

Les circuits d'écartométrie poursuite ainsi que les circuits d'asservissement sont réalisables selon diverses techniques connues et ne sont pas détaillés.

Le système de détection, de localisation et de poursuite omnidirectionnelle qui vient d'être décrit permet d'aboutir à une solution qui autorise montée sur un avion ou autre aéronef:

-de pointer un axe optique X1 dans une direction désignée par un autre moyen (pilote, radar, autre système de visée), direction dans laquelle se trouve une cible aérienne, un avion ennemi par exemple ;

-le fournir alors une image à partir de la réception du rayonnement infrarouge de cette cible (image visualisée par un récepteur du genre télévision placé devant le pilote ou un observateur spécialisé);

-de poursuivre la direction du barycentre de cette cible lorsque cette direction évolue ;

-de fournir des mesures de la distance de cette cible visée par l'émission d'un pinceau infrarouge et la réception du rayonnement réémis par la cible et la mesure du temps de parcours.

Le domaine spatial couvert par le système se distingue de ceux présentés habituellement par ce genre de dispositif en ce qu'il couvre une portion d'espace très grande avec deux degrés de liberté pour la tête optique seulement. La couverture est totale en circulaire et elle peut en élévation atteindre par exemple - 30° vers les sites bas par rapport au plan OX et OY de l'avion, et aller jusqu'à 120° pour les sites haut par rapport à ce même plan. L'angle d'élévation supérieur à 90° est utile pour éviter de perdre l'image de la cible lorsque celle-ci atteint la direction OZ en d'élévation puis la dépasse.

Le système présente de nombreuses variantes et, en dehors de celles qui ont déjà été évoquées, on pourra considérer également le cas ou le détecteur 5 est du type bi-dimentionnnel tel un capteur d'images de télévision par exemple, la détection s'effectuant dans le visible. Dans ce cas, il n'est évidemment pas nécessaire de prévoir le dispositif d'entraînement en rotation 8. Les moyens de compensation de la rotation d'image résultant de l'effet de l'optique de déport d'image 3 suite aux rotations imprimées en élévation et en circulaire pour la tête optique ne sont pas détaillées, ces compensations étant réalisées de manière connue soit au niveau optique, par exemple en agissant sur la commande de balayage de champ 8 circulaire, ou encore de manière électronique en agissant sur la visualisation et en modifiant en conséquence les signaux de déflexion du dispositif de visualisation cathodique 22.

Du point de vue des réalisations, une voie laser 1,06 ou 10,6 microns pourra être couplée avec une voie infrarouge entre 3 et 12 microns; avec une imagerie TV dans le visible on peut coupler un laser 1,06 microns.

On peut encore citer dans les cas où la tête optique est montée sur des parties de l'avion soumises à de fortes vibrations, sur la dérive par exemple, qu'il y a avantage à stabiliser la ligne de visée par un montage gyroscopique, selon des techniques connues notamment en matière de réalisations d'autodirecteurs.

## Revendications

1. Système de détection optoélectrique, de localisation et de poursuite omnidirectionnelle de cible, comportant un dispositif photodétecteur (5) et un ensemble optique orientable disposé sous un dôme (1) transparent pour produire une image du champ observé dans le plan sensible du dispositif photodétecteur (5), cet ensemble optique groupant un objectif d'entrée (2) porté par un montage orientable (4) avec des moyens d'entraînement en rotation autour de deux axes mécaniques perpendiculaires de manière à orienter en circulaire et en élévation l'axe optique de visée autour d'un centre de rotation, et une optique de déport d'image (3) comportant une succession de miroirs de renvoi avec un miroir (31) à l'entrée et un miroir (32) en sortie pour préserver le centrage de l'image dans le plan de détection, le dispositif photodétecteur étant solidaire d'un aéronef qui supporte également l'ensemble optique par l'intermédiaire du montage orientable, ce dernier étant constitué par un cardan avec un premier cadre (41) orienté en circulaire et supportant un deuxième cadre (42) orienté en élévation, lequel supporte l'objectif d'entrée, l'objectif d'entrée focalisant le rayonnement reçu dans un plan image et l'ensemble optique comportant, en outre, un deuxième objectif optique (61-62) pour reformer l'image de champ dans le plan de détection, caractérisé en ce que le dôme est externe au fuselage de l'aéronef porteur, l'optique de déport d'image (3) comporte ledit miroir d'entrée (31) monté sur le deuxième cadre solidaire de l'objectif d'entrée et ledit miroir de sortie (34) solidaire du premier cadre et qui renvoie le rayonnement reçu selon l'axe de rotation en circulaire lequel est solidaire de l'aéronef, le plan image est situé sur le trajet optique entre ces deux miroirs, le deuxième objectif optique (61-62) étant disposé en aval de l'optique de déport d'image (3) ainsi qu'un séparateur de voies (7) permettant de constituer une deuxième voie optique, en ce que le photodétecteur (5) est suivi de circuits de traitement (21) et de circuits d'écartométrie et de poursuite automatique (23) de cible élaborant des données d'écart de cibles (ES et EG) de la cible visée par rapport à la direction de visée du système, et en ce que la deuxième voie comprend une télémétrie laser constituée par un télémètre à laser (36), un miroir déviateur (45) pour dévier le faisceau laser émis et le rayonnement laser reçu, des capteurs (27', 28') de positions angulaires en élévation et en circulaire du miroir déviateur (45), et des servomécanismes de position (46) pour commander selon deux axes de rotation perpendiculaires ledit miroir déviateur, les servomécanismes étant alimentés par lesdites données d'écart de cible (ES et EG) et par les données de positions angulaires en élévation et circulaire ($\theta_E$, $\theta_C$) du miroir déviateur mesurées par les capteurs (27',28').

2. Système selon la revendication 1, caractérisé en ce que l'optique de déport d'image (3) se compose de quatre miroirs, successivement ledit miroir d'entrée (31) pour renvoyer le faisceau optique de réception selon une direction parallèle à celle de rotation en élévation du deuxième cadre (42), deux miroirs intermédiaires (32-33) pour produire ensuite deux réflexions successives orthogonales et renvoyer ledit faisceau vers ledit miroir de sortie (34).

3. Système selon la revendication 2, caractérisé en ce que le miroir d'entrée (31) et les deux miroirs intermédiaires (32 et 33) sont montés solidaires du deuxième cadre (42), ledit plan image étant situé entre les deux miroirs intermédiaires et dans ce plan étant positionnée une lentille collectrice de champ (9).

4. Système selon la revendication 2, caractérisé en ce que seul le premier miroir (31) est solidaire du deuxième cadre, (42) les deux miroirs intermédiaires (32-33) et le miroir de sortie (41) étant entraînés en circulaire par le premier cadre (41), ledit plan image se situant entre les miroirs intermédiaires, une lentille collectrice de champ (9) étant placée dans ce plan et également entraînée en circulaire.

5. Système selon l'une quelconque des revendications de 1 à 4, caractérisé en ce que ledit deuxième objectif comporte une première lentille (61) solidaire du deuxième cadre (42) et formant un montage afocal avec l'objectif d'entrée (2) pour reformer un faisceau parallèle, et une deuxième lentille (62) pour focaliser ledit faisceau lumineux sur le photodétecteur (5).

6. Système selon la revendication 5, caractérisé en ce que le dispositif séparateur de voies optiques (7) est réalisé par un miroir dichroïque interposé entre les deux lentilles (61, 62) formant ledit deuxième objectif.

7. Système selon l'une quelconque des revendications 1 à 6, caractérisé en ce que les circuits de traitement (21) alimentent des circuits de visualisation cathodique (22) et lesdits circuits d'écartométrie et de poursuite automatique (23), ces derniers fournissant lesdites données d'écart ($E_S$, $E_G$) de cible à des servomécanismes d'asservissement de position (24) de la ligne de visée (X1).

8. Système selon l'une quelconque des revendications 1, 6 ou 7, caractérisé en ce que le photodétecteur (5) est une barrette détectrice et que le système est pourvu d'un système de balayage de champ (8) disposé en aval dudit séparateur de voie (7).

9. Système selon la revendication 5 ou 6, caractérisé en ce que l'information de distance fournie par le télémètre laser (36) est appliquée à un dispositif de mise au point (85, 86) pour modifier la position de la deuxième lentille (62) par rapport au photodétecteur (5) en fonction de l'évolution de la distance d'éloignement de la cible.

10. Système selon l'une quelconque des revendications précédentes, caractérisé en ce que l'optique d'entrée est du type Cassegrain (11-12).

11. Système selon l'une quelconque des revendications précédentes, caractérisé en ce que lesdits moyens d'entraînement de l'ensemble optique orientable comportent un moteur (25) d'entraînement en circulaire du premier cadre (41), lequel est constitué par une partie tubulaire en sortie dans laquelle est monté l'objectif de sortie, et ledit moteur d'entraînement circulaire étant fixé sur l'aéronef et couplé à un capteur angulaire (27), et un moteur d'entraînement en élévation (26) couplé également avec un capteur angulaire (28) ces deux organes étant disposés sur un palier d'entraînement en rotation du deuxième cadre (42) en élévation.

12. Système selon l'une quelconque des revendications précédentes, caractérisé en ce que l'ensemble optique orientable est stabilisé par effet gyroscopique.

13. Système selon l'une quelconque des revendications précédentes, caractérisé en ce qu'il est destiné à fonctionner avec une voie laser située aux alentours de 1,06 ou 10,6 microns, et une voie infrarouge entre 3 et 12 microns, pour réaliser un système localisateur omnidirectionnel contribuant à l'interception air/air et à la poursuite de cible.

14. Système selon l'une quelconque des revendications 1 à 7, 10 à 13, caractérisé en ce que le photodétecteur (5) est un capteur d'images de télévision.

15. Système selon la revendication 14, caractérisé en ce qu'il est destiné à fonctionner avec une voie laser aux alentours de 1,06 microns et une voie imagerie TV travaillant dans le visible, pour réaliser un système localisateur omnidirectionnel contribuant à l'interception air/air et à la poursuite de cibles.

## Patentansprüche

1. System zur allseitigen optoelektrischen Erfassung, Ortung und Verfolgung eines Ziels, mit einer Lichtdetektorvorrichtung (5) und einer unter einer durchsichtigen Kuppel (1) angeordneten ausrichtbaren optischen Gerätegruppe zur Erzeugung eines Abbildes des Beobachtungsfeldes in der sensiblen Ebene der Lichtdetektorvorrichtung (5), wobei diese optische Gerätegruppe ein Eintrittsobjektiv (2) auf einem ausrichtbaren Träger (4) aufweist, der Antriebsmittel zur Drehung um zwei senkrechte mechanische Achsen in der Weise besitzt, daß die optische Visierachse im Rotations- und Elevationssinn um ein Rotationszentrum ausgerichtet werden kann, und mit einer Bildversetzungsoptik (3), die eine Folge von Umlenkspiegeln mit einem Eintrittsspiegel (31) und einem Austrittsspiegel (32) zur Aufrechterhaltung der Bildzentrierung in der Erfassungsebene umfaßt, wobei die Lichtdetektorvorrichtung mit einem Luftfahrzeug verbunden ist, das auch die optische Gerätegruppe auf dem ausrichtbaren Träger trägt, welcher aus einer Kardanaufhängung besteht, mit einem ersten Rahmen (41) für die Kreisdrehrichtung und einem zweiten Rahmen (42) für die Elevation, der vom ersten Rahmen getragen wird und das Eintrittsobektiv trägt, wobei das Eintrittsobjektiv die empfangenen Strahlen auf eine Bildebene fokussiert und wobei die optische Gerätegruppe weiter ein zweites optisches Objektiv (61, 62) zur Nacherzeugung des Abbildes des Beobachtungsfeldes in der Erfassungsebene besitzt, dadurch gekennzeichnet, daß sich die Kuppel außerhalb des Rumpfes des Luftfahrzeuges befindet, daß die Bildversetzungsoptik (3) den auf dem mit dem Eingangsobjektiv verbundenen zweiten Rahmen montierten Eintrittsspiegel (31) und den mit dem ersten Rahmen fest verbundenen Austrittsspiegel (34) trägt und die empfangene Strahlung in Richtung der mit dem Luftfahrzeug fest verbundenen Kreisdrehachse reflektiert, daß die Bildebene im optischen Strahlengang zwischen diesen beiden Spiegeln liegt, wobei das zweite optische Objektiv (61, 62) und ein Strahlenteiler (7) zur Bildung eines zweiten optischen Pfads an der Austrittsseite der Bildversetzungsoptik (3) angeordnet ist, daß dem lichtempfindlichen Detektor (5) Verarbeitungskreise (21) sowie Kreise (23) für die Abstandsmessung und automatische Zielverfolgung nachgeschaltet sind, welche Zielabstandsdaten (ES und EG) des anvisierten Ziels in Bezug auf die Visierrichtung des Systems erzeugen, und daß der zweite Pfad einen Laserentfernungsmesser (36) aufweist, der einen Ablenkspiegel (45) zur Ablenkung des ausgesandten Laserstrahles und des empfangenen Laserstrahles, Sensoren (27', 28') zur Erfassung der Winkelpositionen nach Elevations- und Umlaufposition des Ablenkspiegels (45), und Stellungsservogeräte (46) zur Steuerung des Ablenkspiegels nach zwei senkrechten Drehachsen besitzt, wobei diese Servogeräte mit den genannten Zielabstandsdaten (ES und EG) und den Winkelpositionsdaten des Ablenkungsspiegels nach der Elevation und dem Kreisumlauf ($\theta_E$, $\theta_C$) gespeist werden, welche von den Sensoren (27', 28') gemessen werden.

2. System nach Anspruch 1, dadurch gekennzeichnet, daß die Bildversetzungsoptik (3) aus vier Spiegeln besteht, nämlich nacheinander dem Eintrittsspiegel (31) zur Umlenkung des optischen Empfangsstrahles in eine Richtung parallel zur Elevationsdrehrichtung des zweiten Rahmens (42), zwei Zwischenspiegeln (32, 33) zur anschließenden Erzeugung zweier aufeinanderfolgender orthogonaler Reflexionen sowie zur Weiterleitung des Strahles zum Austrittsspiegel (34).

3. System nach Anspruch 2, dadurch gekennzeichnet, daß der Eintrittsspiegel (31) und die beiden Zwischenspiegel (32 und 33) fest mit dem zweiten Rahmen (42) verbunden sind, wobei sich die Bildebene zwischen den beiden Zwischenspiegeln befindet und eine Feldsammellinse (9) in dieser Ebene angeordnet ist.

4. System nach Anspruch 2, dadurch gekennzeichnet, daß nur der erste Spiegel (31) fest mit dem zweiten Rahmen (42) verbunden ist, während die beiden Zwischenspiegel (32, 33) und der Austrittsspiegel (41) durch den ersten Rahmen (41) in Kreisdrehung versetzt werden, wobei sich die Bildebene zwischen den Zwischenspiegeln befindet und eine Feldsammellinse (9) in dieser Ebene angeordnet ist und ebenfalls in Drehung versetzt wird.

5. System nach einem beliebigen der Ansprüche 1 bis 4, dadurch gekennzeichnet, daß das zweite Objektiv eine erste Linse (61), die fest mit dem zweiten Rahmen (42) verbunden ist und mit dem Eintrittsobjektiv (2) eine afokale Anordnung zur Bildung eines parallelen Strahles bildet, und eine zweite Linse (62) zur Fokussierung des Lichtstrahles auf den Lichtdetektor (5) aufweist.

6. System nach Anspruch 5, dadurch gekennzeichnet, daß die optische Teilervorrichtung (7) durch einen dichroitischen Spiegel gebildet wird, der zwischen den beiden das zweite Objektiv bildenden Linsen (61, 62) eingefügt ist.

7. System nach einem beliebigen der Ansprüche 1 bis 6, dadurch gekennzeichnet, daß die Verarbeitungskreise (21) Kathodenstrahl-Sichtbarmachungskreise (22) und die Kreise (23) für die Abstandsmessung und automatische Verfolgung speisen, wobei diese letzteren die genannten Zielabstandsdaten ($E_S$, $E_G$) an die Servogeräte (24) zur Positionsregelung der Visierlinie (X1) liefern.

8. System nach einem beliebigen der Ansprüche 1, 6 oder 7, dadurch gekennzeichnet, daß der lichtempfinliche Detektor (5) als Detektorleiste ausgebildet ist, und daß das System mit einem Feldabtastsystem (8) ausgestattet ist, welches an der Austrittsseite des Strahlenteilers (7) angeordnet ist.

9. System nach Anspruch 5 oder 6, dadurch gekennzeichnet, daß die vom Laserentfernungsmesser (36) gelieferte Abstandsinformation an eine Einstellvorrichtung (85, 86) geleitet wird, um die Stellung der zweiten Linse (62) in Bezug auf den Lichtdetektor (5) in Abhängigkeit von der Entwicklung des Entfernungsabstandes des Ziels zu modifizieren.

10. System nach einem beliebigen der vorhergehenden Ansprüche, dadurch gekennzeichnet, daß die Eingangsoptik vom Typ Cassegrain (11, 12) ist.

11. System nach einem der vorhergehenden Ansprüche, dadurch gekennzeichnet, daß die Antriebsmittel der ausrichtbaren optischen Gerätegruppe einen Antriebsmotor (25) für die Kreisdrehung des ersten Rahmens (41) aufweisen, der aus einem rohrförmigen Abschnitt besteht, in dessen Ausgang das Austrittsobjektiv montiert ist, wobei der Antriebsmotor für die Kreisdrehung am Luftfahrzeug befestigt und an einen Winkelsensor (27) angekuppelt ist, und daß die Antriebsmittel einen Antriebsmotor (26) für die Elevationsrichtung aufweisen, der ebenfalls mit einem Winkelsensor (28) verbunden ist, und daß diese beiden Organe auf einem Drehantriebslager der zweiten Rahmens (42) für die Elevation angeordnet sind.

12. System nach einem beliebigender vorhergehenden Ansprüche, dadurch gekennzeichnet, daß die ausrichtbare optische Gerätegruppe gyroskopisch stabilisiert wird.

13. System nach einem beliebigender vorhergehenden Ansprüche, dadurch gekennzeichnet, daß das System für die Zusammenarbeit mit einem Laserkanal im Bereich um 1.06 oder 10,6 Mikrometer und mit einem Infrarotkanal im Bereich zwischen 3 und 12 Mikrometer bestimmt ist, um ein allseitig wirdendes Ortungssystem zu schaffen, das zur Luft/Luft-Erfassung und zur Verfolgung eines Zieles beiträgt.

14. System nach einem beliebigen der Ansprüche 1 bis 7, 10 bis 13, dadurch gekennzeichnet, daß der Lichtdetektor ein Fernsehbildaufnehmer ist.

15. System nach Anspruch 14, dadurch gekennzeichnet, daß das System für die Zusammenarbeit mit einem Laserkanal im Bereich um 1,06 Mikrometer und mit einem im sichtbaren Bereich arbeitenden TV-Bildkanal bestimmt ist, um ein allseitig wirkendes Ortungssystem zu schaffen, das zur Luft/Luft-Erfassung und zur Verfolgung von Zielen beiträgt.

## Claims

1. An optoelectrical system for the omnidirectional detection, localization and persuit of a target, comprising a photodetector device (5) and an adjustable optical assembly disposed underneath a transparent dome (1) for producing an image of the observed field within the sensitive plane of the photodetector device (5), this optical assembly grouping an input objective (2) carried by an adjustable mount (4) together with drive means for providing rotation about two perpendicular mechanical axes, in such a way as to orient the optical aiming axis in the circular and elevational direction about a center of rotation, and an image offset objective (3) comprising a sequence of reflection mirrors including an input mirror (31) and an output mirror (32) for preserving the centering of the image within the detection plane, the photodetector device being solidly fixed to an airborne vehicle which carries also the optical assembly by the intermediary of the adjustable mount, this latter being constituted by a cardan joint having a first frame (41) oriented in the circular sense and supporting a second frame (42) oriented in the elevational sense, which second frame supports the input objective, the latter focussing the received beam onto an image plane, and the optical assembly comprising, in addition, a second optical objective (61, 62) for reforming the field image within the detection plane, characterized in that the dome is located outside the fuselage of the airborne vehicle and that the image offset objective (61, 62) comprises both said input mirror (31) mounted on the second frame fixed to the input objective, and said output mirror (34) fixed to the first frame and which reflects the received beam along the axis of rotation in the circular sense, which axis is fixed to the airborne vehicle, that the image plane is located in the optical trajectory between the two mirrors, the second optical objective (61, 62) as well as a path separator (7) permitting the constitution of a second optical path being disposed downstream the image offset objective (3), and that the photodetector (5) is followed by treatment circuits (21) and by circuits (23) for measuring the distance and automatically persuing the target, said circuits being adapted to generate target distance data (ES and EG) of the aimed target in relation to the aiming direction of the system, and that the second path includes a laser telemetering device constituted by a laser telemeter (36), a deviating mirror (45) for deviating the emitted beam and the received laser laser beam, angular position sensors (27', 28') for detecting the circular and elevational position of the deviating mirror (45), and position adjusting servomechanisms (46) for controlling said deviating mirror according to two perpendicular axes of rotation, these servomechanisms being fed by said distance data of the target ( ES and EG) and by the angular position data ($\theta_E$, $\theta_C$) of the deviating mirror in the elevational and circular direction, as measured by the sensors (27', 28').

2. A system according to claim 1, characterized in that the image offset objective (3) is composed of four mirrors, of which, successively, the input mirror (31) serves to reflect the received optical beam in a direction parallel to the sense of rotation in the elevational direction of the second frame (42), and of which two intermediate mirrors (32, 33) serve to cause thereafter two successive orthogonal reflections and to reflect said beam onto said output mirror (34).

3. A system according to claim 2, characterized in that the input mirror (31) and the two intermediate mirrors (32 and 33) are solidly mounted on the second frame (42), said image plane being located between the two intermediate mirrors, and a field collecting lens (9) being positionned within this plane.

4. A system according to claim 2, characterized in that only the first mirror (31) is solidly fixed to the second frame (42) whereas the two intermediate mirrors (32, 33) and the output mirror are circularly driven by the first frame (41), said image plane being located between the intermediate mirrors, and a field collecting lens (9) being placed within this plane and also driven circularly.

5. A system according anyone of claims 1 to 4, characterized in that the second objective comprises a first lens (61) fixed to the second frame (42) and forming an afocal mount including the second objective (2) for reforming a parallel beam, and a second lens (62) for focussing said luminous beam onto the photodetector (5).

6. A system according to claim 5, characterized in that the optical path separating device (7) is constituted by a dichroitic mirror inserted between the two lenses (61, 62) and forming said second objective.

7. A system according to anyone of the claims 1 to 6, characterized in that the treatment circuits (21) feed cathode ray visualization circuits (22) and the circuits (23) for measuring the distance and for automatic persuit, these latter circuits being adapted to deliver said distance data ($E_s$, $E_G$) of the target to servomechanisms (24) which control the position of the aiming axis (X1).

8. A system according to anyone of claims 1, 6 or 7, characterized in that the photodetector (5) has the shape of a detecting barrette and that the system is provided with a field scanning system (8) disposed downstream of the path separator (7).

9. A system according to claim 5 or 6, characterized in that the information on the distance delivered by the laser telemeter (36) is applied to an adjustment device (85, 86) adapted to modify the position of the second lens (62) in relation to the photodetector (5) as a function of the evolution of the distance of the target.

10. A system according to anyone of the preceding claims, characterized in that the optical input is of the Cassegrain type (11, 12).

11. A system according to anyone of the preceding claims, charaterized in that said drive means for the adjustable optical assembly comprise a motor (25) for circularly driving the first frame (41), which is made of a tube section, in the outlet of which is mounted the output objective, said motor for circulaly driving being fixed to the airborne vehicle and coupled to an angular sensor (28), and these two operating elements being disposed on a rotative drive bearing of the elevational second frame (42).

12. A system according to anyone of the preceding claims, characterized in that the adjustable optical assembly is stabilized by the gyroscopic effect.

13. A system according to anyone of the preceding claims, characterized in that the system is intended to function with a laser channel adapted to operate at about 1,06 or 10,6 micrometer, and with an infrared channel ranging between 3 and 12 micrometer, in order to realize an omnidirectional localization system contributing to the air-to-air interception and to the pursuit of a target.

14. A system according to anyone of the claim 1 to 7, 10 to 13, characterized in that the photodetector (5) is a television image pick-up.

15. A system according to claim 14, characterized in that the system is intended to function with a laser channel adapted to operate at about 1,06 micrometer and with a TV image channel operating in the visible light range, in order to realize an omnidirectional localization system contributing to the air-to-air interception and to the pursuit of targets.

# FIG_1

DETECTEUR IR

5

TRAITEMENT 21

$\theta_C$
$\theta_E$

ECARTOMETRIE POURSUITE 23

$E_S$
$E_G$

TELEMETRE LASER 36

$D$

VISUALISATION 22

SERVO CALAGE LIGNE DE VISEE 24

CALAGE INITIAL 92

SERVO CALAGE FIN LASER 46

CONDUITE DE TIR 91

1

FIG_2

$X_1$

2

31

32

9

10

34

33

Z

61

7

45

37

81

8

83

82

3

38

39

TELEMETRIE LASER

85

BALAYAGE CIRCULAIRE

86

MISE AU POINT

D

62

50

5

# FIG_3

# FIG_4

# FIG_5

# FIG_6

# FIG_7